(19) **Europäisches Patentamt / European Patent Office / Office européen des brevets**

(11) **EP 1 795 290 A2**

(12) **EUROPEAN PATENT APPLICATION**

(43) Date of publication:
**13.06.2007 Bulletin 2007/24**

(51) Int Cl.:
***B23H 9/00*** *(2006.01)* ***B23H 7/28*** *(2006.01)*

(21) Application number: **06025222.8**

(22) Date of filing: **06.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.12.2005 IL 17239105**

(71) Applicant: **Abraham, Moshe**
**44830 Shilo (IL)**

(72) Inventors:
- **Abraham, Moshe**
  **Mobile Post Ephraim 44830 (IL)**
- **Stahl, Zeev**
  **Jerusalem 97823 (IL)**
- **Fredkin, Binyamin**
  **Alon Shvut 90433 (IL)**

(74) Representative: **Patentanwälte**
**Ruff, Wilhelm, Beier, Dauster & Partner**
**Kronenstrasse 30**
**70174 Stuttgart (DE)**

(54) **Attachment for spark erosion machines**

(57)   There is provided an attachment for a spark erosion machine having a working head, the attachment including a top part fixedly attachable to the working head, a body suspended from, and moveable relative to, the top part with one degree of freedom in translation, a guide for guiding the body in the translational movement and a main shaft mounted in the body and rotatable about an axis parallel to the translational movement. There is also provided a driver for imparting the main shaft a rotational movement, a drive pin having an axis parallel to the axis of the main shaft and rotatably connected thereto by an adjustable connector adapted to connect the drive pin to the main shaft in a plurality of positions between a first limit position of coaxiality and a second limit position of maximal eccentricity relative to the main shaft. The attachment also includes an electrode holder associated with the drive pin, and coupler connected to the electrode holder for resolving the rotary movement of the drive pin, when in an axially eccentric position, into an electrode movement in a compound XY-direction only, producing an orbital movement of an electrode mounted in the electrode holder.

EP 1 795 290 A2

## Description

## Field of the Invention

The present invention relates to an attachment for conventional spark erosion machines, allowing the latter to produce, in particular, threads.

## Background of the Invention

Spark-erosion machines work by producing electrical sparks between an electrode and a workpiece immersed in a dielectric fluid. The spark dislodges small particles from the workpiece which are subsequently flushed away by a jet of the dielectric. If such particles are not completely swept away, pre-settable electrical conditions will be altered, causing the electric controls to temporarily withdraw the electrode until the debris has been flushed away and the pre-set conditions have been re-established, after which the initial erosion process continues.

Spark-erosion machines that are capable of producing threads do in fact exist in which the X-Y working table can be programmed to carry out a compound movement in the X-Y plane and the rotary electrode movement around the Z-axis can be coordinated with its longitudinal movement along that axis. Either one or the other of these features can be used to produce threads either by the direct method in which an electrode in the form of a thread tap (smaller than a standard tap by the required spark gap) is advanced into the workpiece, producing the thread turn by turn, or by the orbital method in which the electrode in the form of a tap of an outside diameter slightly smaller than the core diameter of the thread is introduced into the pre-existent bore, is fed sidewise into the workpiece to the full depth of the thread, and then moved orbitally, finishing the thread in one orbital motion of the electrode.

The above-mentioned machines, known as CNC (Computerized Numerical Control) spark erosion machines are, however, far more complex and expensive than the well-known and widely used non-CNC spark erosion machines.

## Disclosure of the Invention

It is thus one of the objects of the present invention to provide an attachment for non-CNC spark-erosion machines that will allow such machines to produce threads, undercut shapes and the like.

In accordance with the present invention this is achieved by an attachment for a spark erosion machine having a working head, said attachment comprising a top part fixedly attachable to said working head; a body suspended from, and moveable relative to, said top part with one degree of freedom in translation; guide means for guiding said body in said translational movement; a main shaft mounted in said body and rotatable about an axis parallel to said translational movement; means for imparting said main shaft a rotational movement; a drive pin having an axis parallel to the axis of said main shaft and rotatably connected thereto by adjustable connection means adapted to connect said drive pin to said main shaft in a plurality of positions between a first limit position of coaxiality and a second limit position of maximal eccentricity relative to said main shaft; an electrode holder associated with said drive pin, and coupling means connected to said electrode holder for resolving the rotary movement of said drive pin when in an axially eccentric position into an electrode movement in a compound XY-direction only, producing an orbital movement of an electrode mounted in said electrode holder.

## Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purpose of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Fig. 1 is an exploded view of a preferred embodiment of the attachment according to the present invention;
Fig. 2 is an enlarged view of Section I of Fig. 1;
Fig. 3 is an enlarged view of Section II of Fig. 1;
Fig. 4 is an enlarged view of Section III of Fig. 1;
Fig. 5 is a cross-sectional view in the plane of the crank block;
Fig. 6 is a view in cross-section along plane VI-VI in Fig. 5;
Fig. 7 is a view in cross-section along plane VII-VII in Fig. 5;
Fig. 8 is a view in cross-section along plane VIII-VIII in Fig. 5;
Fig. 9 is a cross-sectional top view of the crank block as seen with the drive pin in its extreme position of eccentricity;
Fig. 10 is a cross-sectional top view of the electrode holder with the drive pin in its extreme position of eccentricity;
Fig. 11 is a greatly enlarged schematic view of the electrode and its path inside the workpiece;
Figs. 12a to 12m illustrate the step-by-step production of an internal thread in a workpiece;

Fig. 13 depicts an electrode in the centre of an internal thread, with an enlarged insert showing the spark gap between the electrode and the workpiece;

Fig. 14 represents the electrode and the workpiece as shown schematically in Fig. 12m;

Fig. 15 shows an embodiment of the invention suitable for the preparation of recesses of a rotational symmetry;

Figs. 16a-16d illustrate the stages of preparation of a workpiece with such a recess;

Fig. 17 is an elevational view of yet another embodiment of the invention in which the helix has been replaced by an electrical motor;

Fig. 18 is a view in cross-section along plane XVIII-XVIIII in Fig. 17;

Fig. 19 is a view in direction of arrows A in Fig. 18;

Fig. 20 shows an embodiment of the invention equipped with a signalling device indicating the conclusion of the erosion process;;

Figs. 21, 22 and 23 illustrate a variant of the electrode holder;

Fig. 24 is a top view of a variant of the electrode holder of Fig. 4;

Fig. 25 is an elevation of Fig. 24;

Fig. 26 is a perspective view of the device depicted in Figs. 24 and 25, and

Fig. 27 represents an enlarged view of a portion of Fig. 25.

## Detailed Description of the Preferred Embodiments

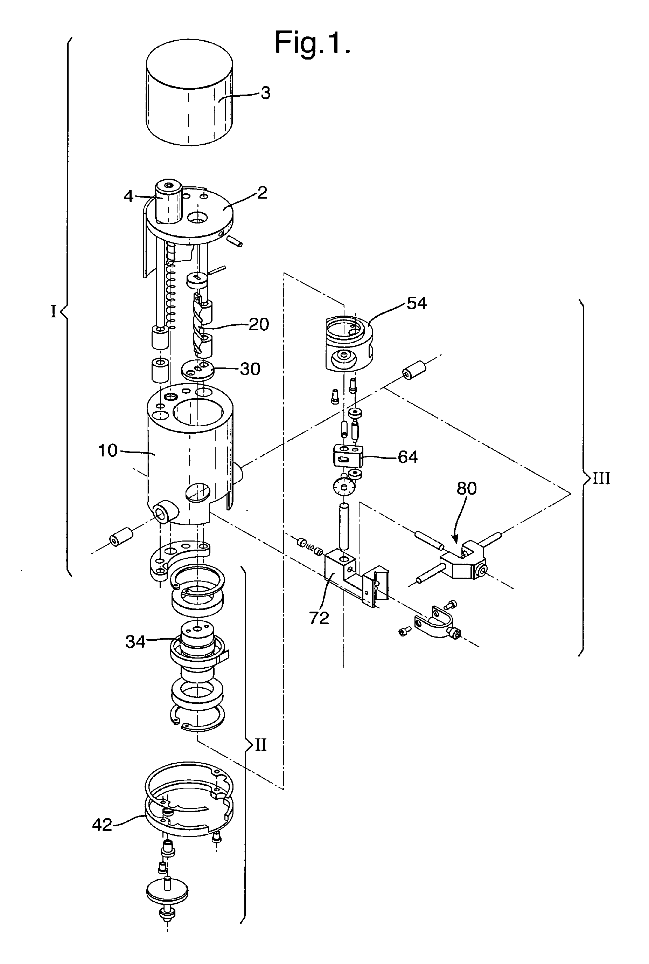

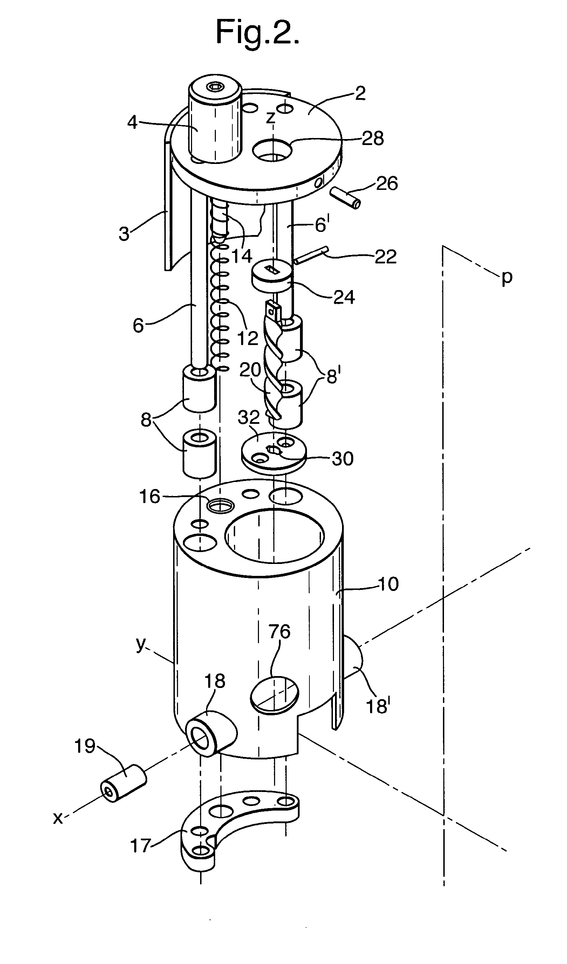

Referring now to the drawings there is seen in Fig. 1 an exploded view of the attachment according to the invention. For the sake of clarity, this view has been subdivided into three sections I, II and III, which are represented separately and to a larger scale in Figs. 2, 3 and 4, respectively.

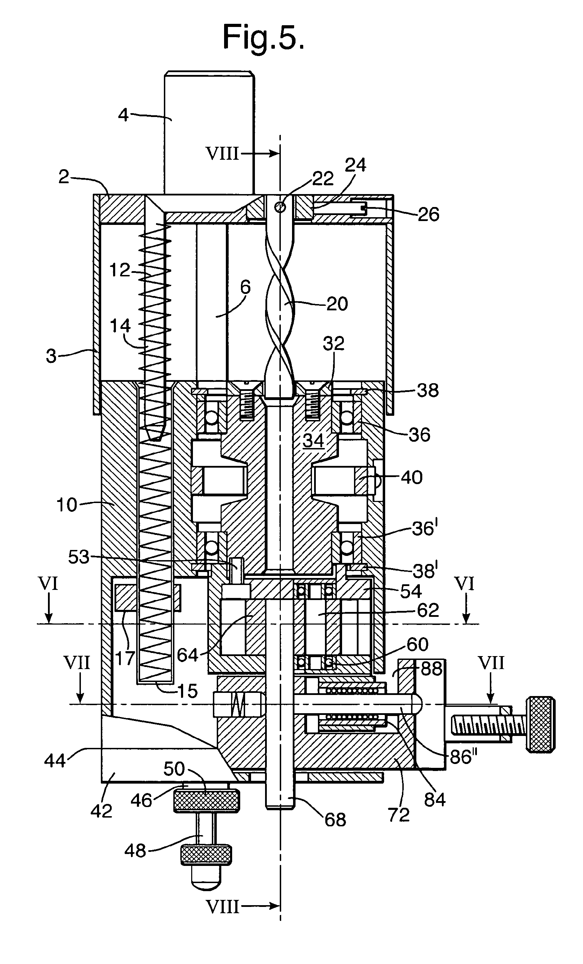

The attachment (Fig. 2) comprises a top plate 2, carrying a protective skirt 3 and provided with a chucking shaft 4 by which the attachment is mounted on the head of the machine. To top plate 2 are affixed two posts 6, 6' which slide in linear bearings 8, 8' mounted in body 10, so that the latter is attached to the head of the machine with one degree of freedom in translation in direction of the Z-axis. A compression spring 12, the upper end of which is guided by a bar 14, rests against the bottom 15 (Fig. 5) of a tube 16 mounted in body 10. Spring 12 tends to push body 10 away from top plate 2. To the underside of body 10 is attached a retaining strip 17, which, being attached to posts 6, 6', prevents the upper and lower parts of the attachments from being pulled apart.

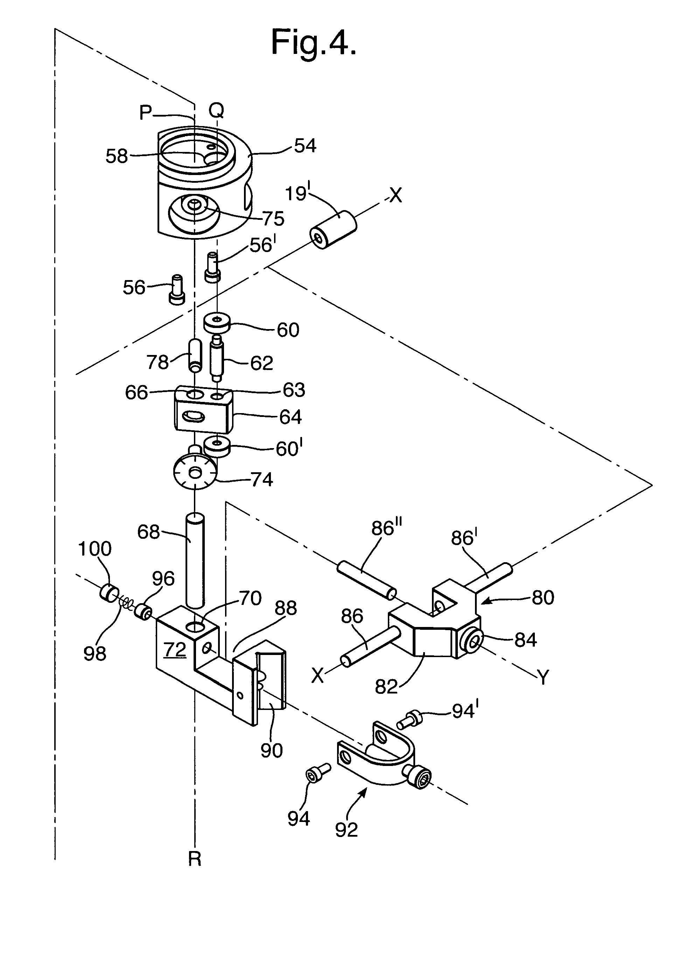

Also shown in Figs. 2 and 4 are bearing housings 18, 18', advantageously integral with body 10, and linear bearings 19, 19', the purpose of which will become apparent further below.

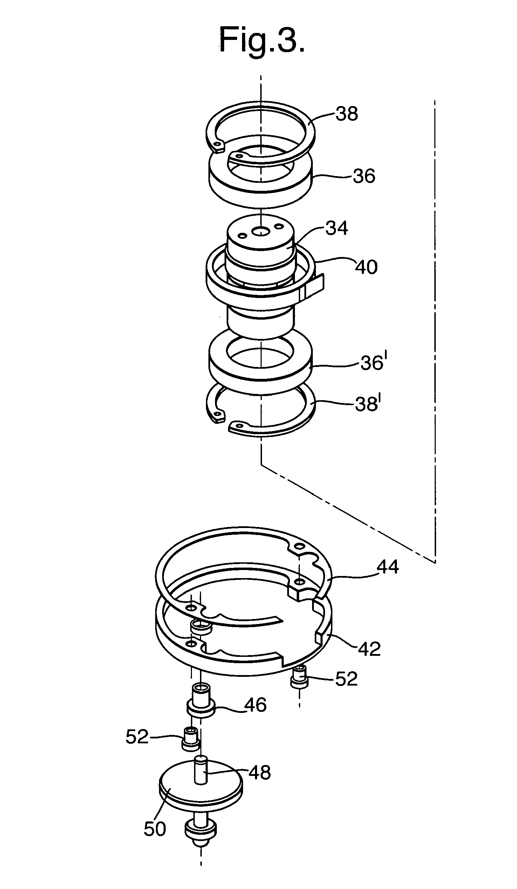

Further seen is a helix 20, advantageously made of a twisted metal strip, the upper end of which is fixedly attached by means of a pin 22 to a helix holder 24 which, in turn, is held by means of screw 26 in a bore 28 in top plate 2. Helix 20 screws into an appropriately shaped hole 30 in a plate 32 fixedly attached to main shaft 34, shown in the exploded view of Fig. 3 and the cross-sectional assembly of Fig. 5. Main shaft 34 is rotatably mounted in ball bearings 36, 36' held in position by retaining rings 38, 38'. These components, as well as a spiral spring 40 are seen to better advantage in Fig. 5. Spring 40, the inner end of which is attached to main shaft 34 and the outer end of which is attached to body 10, is intended to prevent lost motion.

In the lower half of Fig. 3 is seen a bottom plate 42 closing up body 10 from below. As plate 42 must be electrically insulated from body 10, there is provided an insulating gasket 44, which constitutes the interface between plate 42 and body 10. An additional component is a nut 46 pressed into plate 42, into which is threaded a metal stop 48 provided with locking disk 50. As will be explained in detail further below, as soon as the settable stop 48, descending with the entire attachment, hits the working table, helix 20 continues descending and sets into motion the entire erosion process. Sleeves 52 made of an insulating material, serve to accommodate screws (not shown) to attach bottom plate 42 to body 10.

Fig. 4 comprises the end effectors of the so far described attachment components. There is seen a crank housing 54 attached to main shaft 34 by means of screws 56, 56'. Housing 54 has two coaxial bores 58 of which only the top one is visible, into which bores fit two ball bearings 60 accommodating the ends of a shaft 62 that, seated in a bore 63 of crank block 64, serves as a hinge for the latter. Crank block 64 has a second bore, 66, into which is press-fitted a drive pin 68 which slide-fits a bore 70 in electrode holder 72.

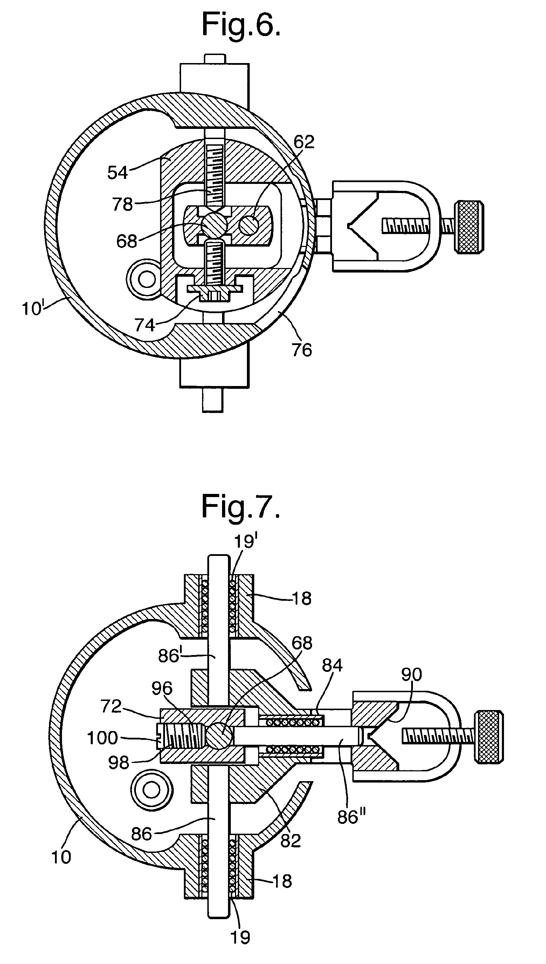

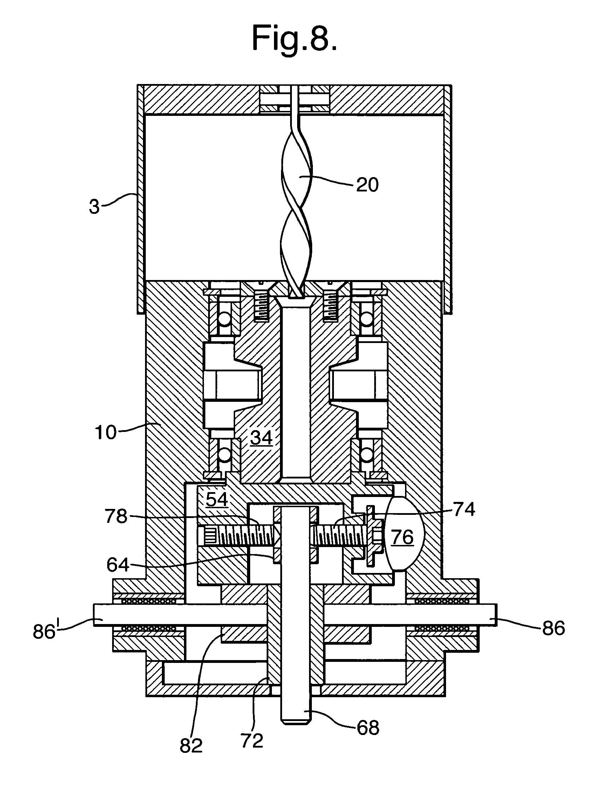

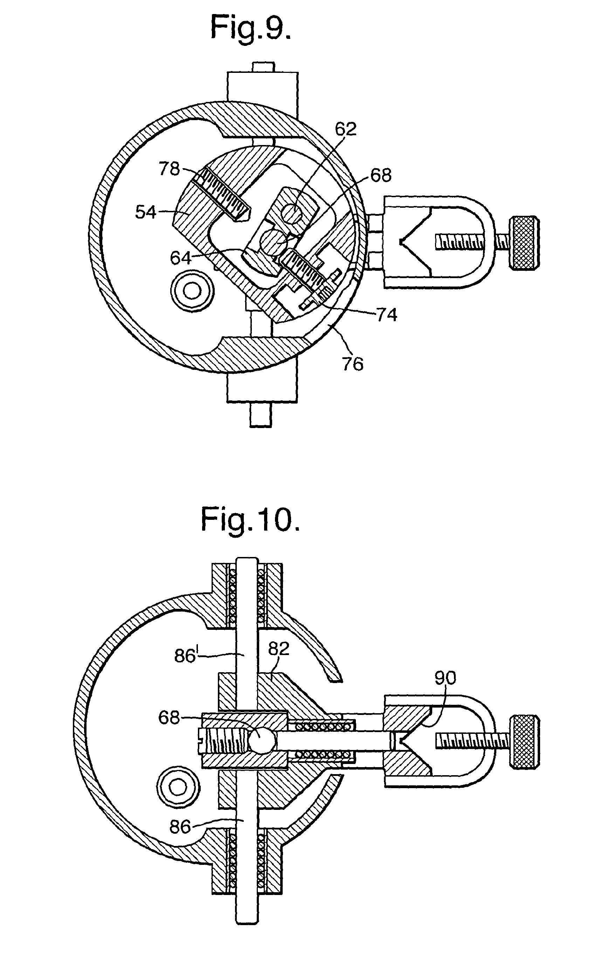

Further seen in Fig. 4 is a scale-bearing setting screw 74 seated in a collar in a recessed part 75 of crank housing 54, accessible through an opening 76 in body 10, by means of which screw the depth of penetration of the electrode on its orbital path can be set between a position of rest in which pin 68 is concentric with the axis of main shaft 34 (Figs. 5, 6, 7 and 8) and a position of maximal penetration in which the eccentricity of pin 68 relative to main shaft 34 is maximal, as is penetration (Figs. 9 and 10). As can be seen in Fig. 6, the position of rest is defined by a counter-screw 78 seated in crank housing 54.

Also shown is a yoke-shaped coupling member 80, which is in fact a variant to the well-known Oldham coupling, and consists of a fork-like central portion 82, in which is mounted a linear bearing 84 and in the tines of which are fixedly seated bars or rods 86, 86'. These bars are held and guided in linear bearings 19, 19' shown in Figs 2 and 4, which guide coupling member 80 in the X-direction.

A third rod, 86", is mounted in electrode holder 72, bridging recess 88 (see Fig. 5). It is along this rod that linear bearing 84 guides coupling member 80 in the Y-direction.

While linear bearings 84 contribute to smooth working of coupling 80, its efficiency could be further improved by adding another bar coaxial with bar 86".

The electrode intended to perform the erosion process is clamped into V-notch 90 of the electrode holder 72 by means of clamp 92 attached to electrode holder 72 with screws 94, 94'.

Coupling member 80 is one of the major components of the attachment according to the invention: it resolves the rotary motion of drive pin 68 in its eccentric position into a succession of XY-steps that add up to the electrode moving along an orbital, circular path, while not rotating about its own axis, as will be explained in detail further below.

A further component important to the proper performance of the attachment is a friction pad 96 pressed by a spring 98 against pin 68. Spring 98 is compressed and retained by a screw 100, all seen to best advantage in Figs. 4 and 7. This friction arrangement is necessary to ensure immediate reaction to the frequent stoppages, withdrawals and re-engagements inherent in the spark erosion process, that are required to flush away erosion debris.

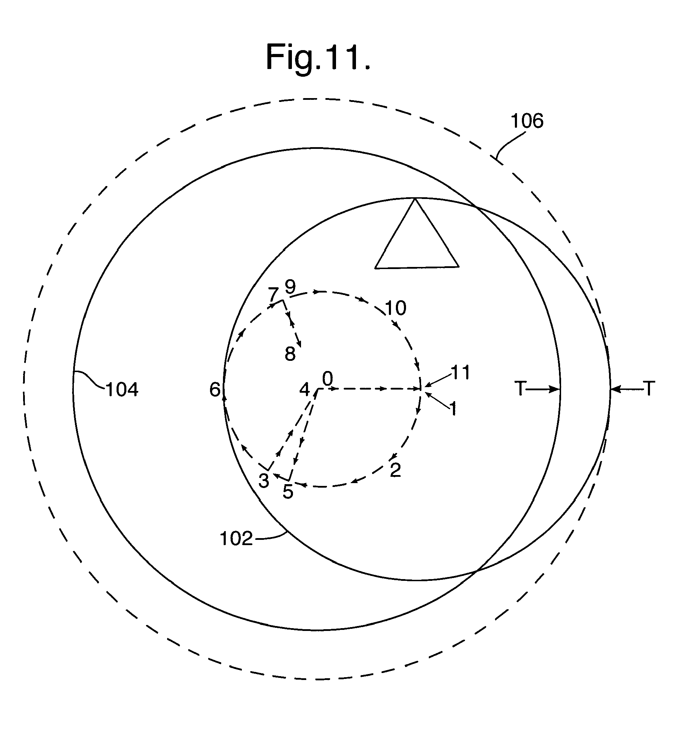

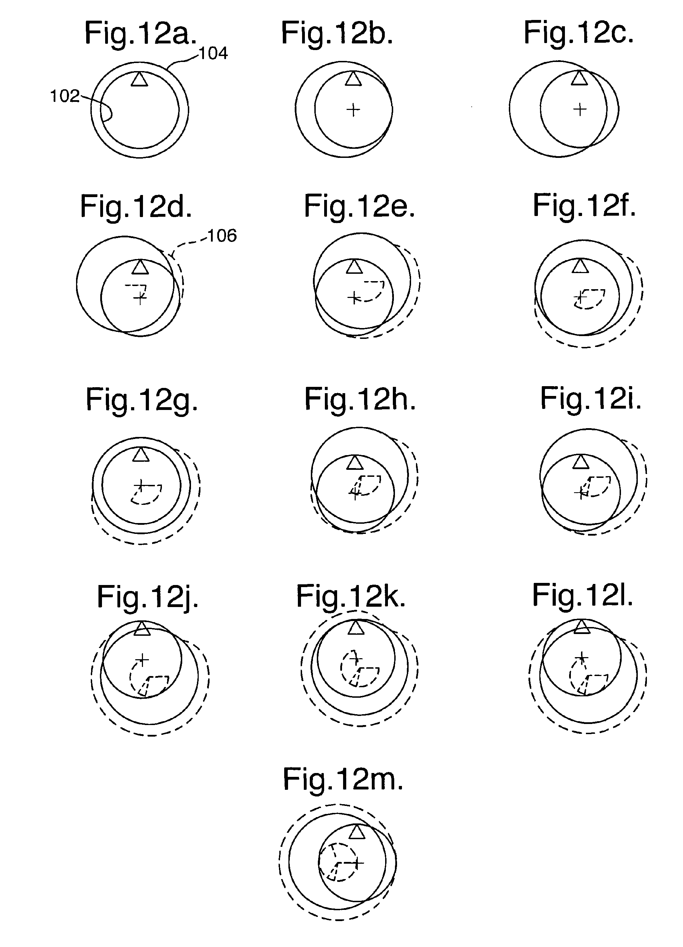

Fig. 11 illustrates the path of the centre of electrode 102 inside the preliminary bore 104 after the first penetration of electrode 102 to the full depth T of the thread 106. The initial position of the centre of electrode 102 is denoted 0, which is the position in which electrode 102 is still in the centre of bore 104. Having penetrated to the depth T, the orbital motion begins, with the triangle marking an arbitrary point at the electrode circumference that, as can be seen in the following Figs. 12a to 12 m, remains stationary, indicating the absence of rotational movement. Several virtual stations are marked along this path, as well as some stoppages, withdrawals and re-engagements that have already been mentioned as inherent to the spark erosion process. Thus, it can be seen that e.g., at station 3 a stoppage occurs, followed by a withdrawal right to the centre and a re-engagement at a point that has been already passed. It will be appreciated that these stoppages, causing reversal of the head movement, are effected by the control unit of the spark erosion machine itself, while the prompt withdrawals and re-engagements are facilitated by the above-mentioned friction pad 96 that, immediately after a stoppage and head reversal, causes crank block 64 to be thrown against counter-screw 78, thereby moving electrode 102 towards centre station 0. Conversely, when the blockage has been flushed away, the head of the machine resumes its descent, causing electrode 102 to return, due to the inevitable delay, to point 5, i.e., a point already passed by electrode 102. Minor stoppages, such as that between stations 7, 8, 9, are more transient, inasmuch as electrode 102 doesn't even return fully to centre 0.

Figs. 12a to 12m schematically illustrate an erosion cycle from the introduction of electrode 102 (Fig. 12a) into preliminary bore 104 to the finished thread 106 (Fig. 12m).

From its central position in Fig. 12a, electrode 102 has been brought into contact with the wall of bore 104 (Fig. 12b), at which instant the spark erosion process begins, with full penetration concluded in Fig. 12c. Now the orbital movement sets in, with the finished thread portion (Fig. 12d) indicated by dashed lines. Inside electrode 102 the movement of the electrode centre is also indicated by dashed lines, straight or curved.

Erosion continues in Fig. 12e, when the control unit of the machine senses an interference with the proper erosion process, causing a withdrawal of electrode 102 towards the central position, attained in Fig. 12g, via Fig. 12f.

The interfering factor having been eliminated (e.g., by flushing), electrode 102 (Fig. 12h) returns to the erosion position, as will be noted, to a point that has already been passed (comp. Fig. 11, stations 3, 4, 5), with the electrode position of Fig. 12e being re-attained in Fig. 12i. From that point the erosion process is seen to go on without hindrance except for a short, transient withdrawal in Fig. 12k. The process is concluded in Fig. 12m. It will be appreciated that the movement of electrode 102 throughout the entire process was merely orbital, not rotational, as can be seen by the non-changing position of the triangular mark.

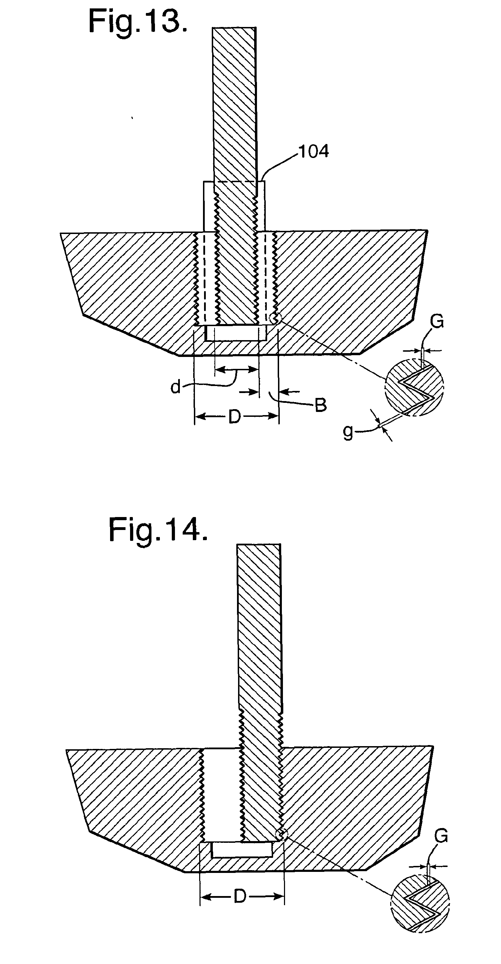

The electrodes used for the attachment according to the invention are advantageously made of graphite or copper and have the same pitch and tooth shape as the internal thread to be formed, except that its outside diameter d (Fig. 13) must be smaller than the preliminary hole 104 prepared in the workpiece.

The relevant dimensions are given by the expression:

$$B = \frac{D - d}{2} - G$$

where, for a tooth shape of 60°, G = 2g, with g, being the spark gap, typically varying between 0.05 and 0.15 mm.

The smaller the G, the better the surface quality to the thread produced, but the slower the erosion process and the higher electrode wear.

Electrodes with a left-handed thread will obviously produce a left-handed internal thread.

The attachment can also be used to produce external threads by using electrodes in the form of nuts.

Fig. 14 represents the electrode and the workpiece as shown schematically in Fig. 12m.

While for the production of internal threads the purely orbital, non-rotational method was used, the attachment according to the invention also allows the application of orbital-rotational methods.

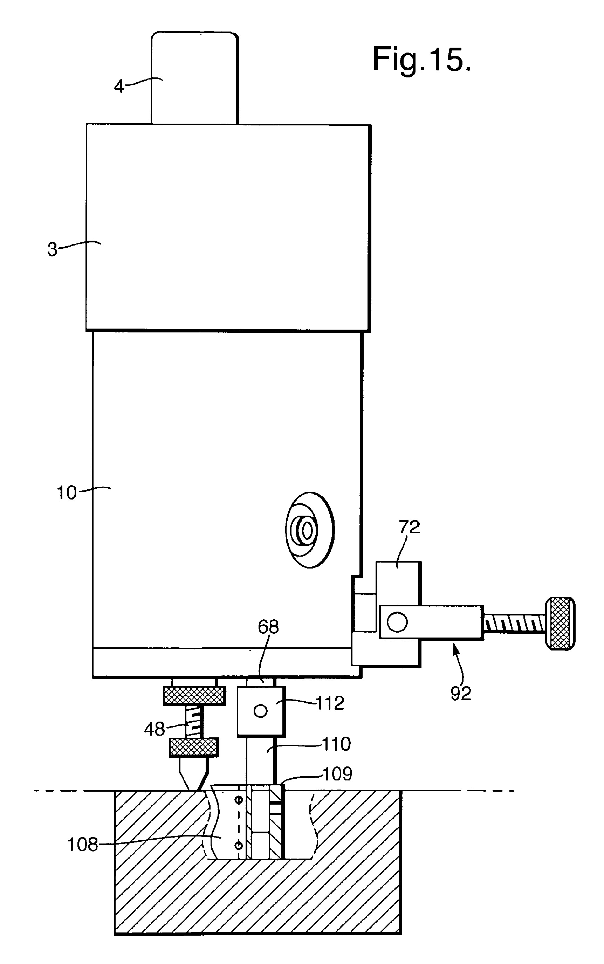

Fig. 15 shows an embodiment of the invention as used for the preparation, by electro-erosion, of workpieces having recesses of a rotational symmetry which, moreover, have an undercut, as seen in Fig. 15.

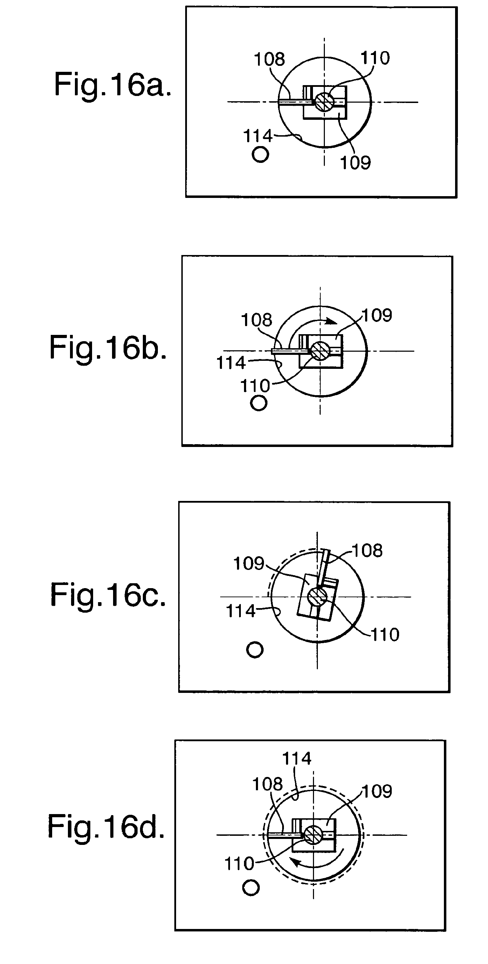

In this application, the device uses an electrode in the form of an appropriately shaped blade 108 attached to a block-like body 109, which in its turn, is mounted on a shaft 110 connected to pin 68 via a sleeve 112. With shaft 110 in the central position (i.e., coaxial with the main shaft 34 (Fig. 5), electrode blade 108 is introduced into the preliminary bore (Fig. 16a). In Fig. 16b, the erosion process has started, with blade 108 penetrating to the required depth. In Fig. 16c blade 108 has begun to rotate, producing the above-mentioned undercut. In Fig. 16d the erosion process has been concluded and blade 108 withdrawn to the central position, to facilitate extraction. In this embodiment, the same stoppage, withdrawal and re-engagement episodes occur as with the above-discussed thread production.

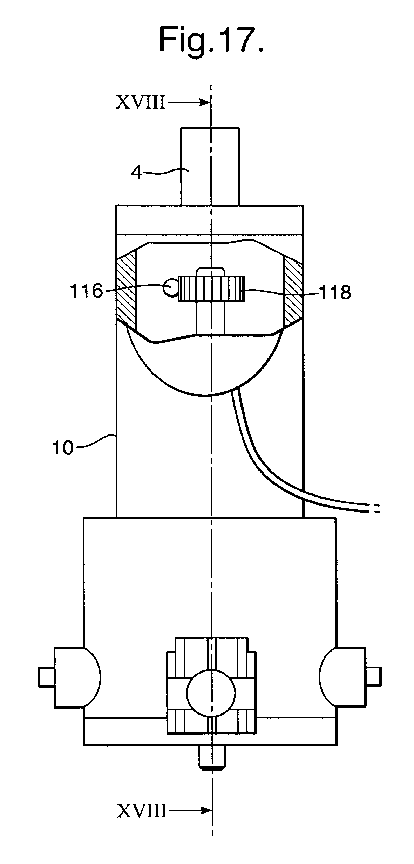

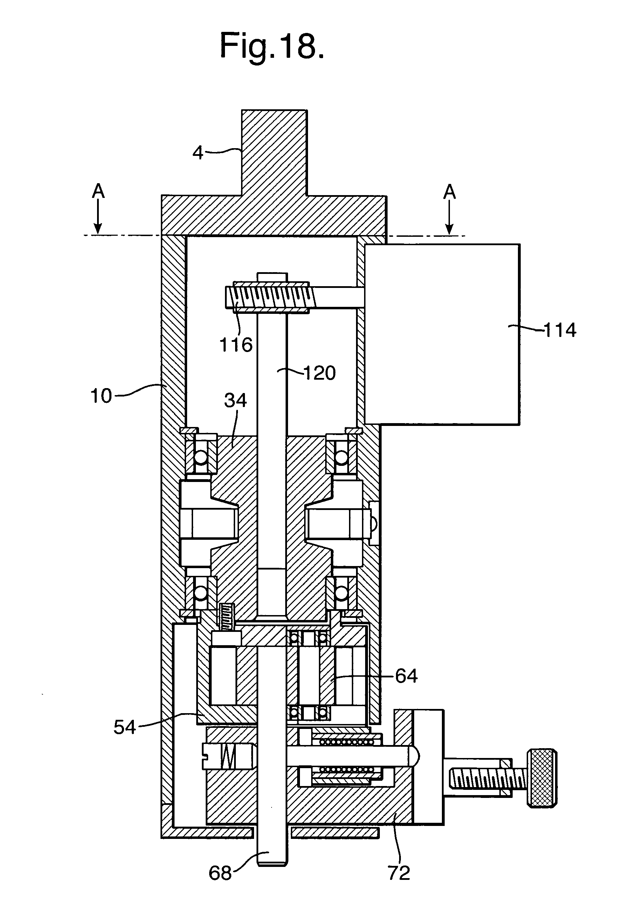

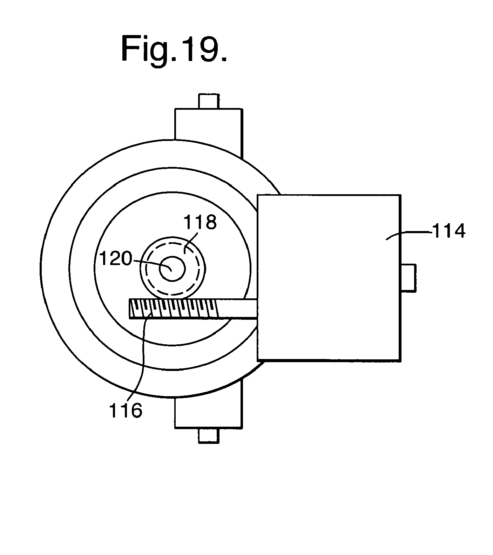

Figs. 17 to 19 represent an additional embodiment of the invention, in which helix 20 (Fig. 2) is replaced by an electric servo-motor 114 to the rotor of which is connected a worm 116 engaging a worm wheel 118 mounted on a shaft 120 that drives the main shaft 34. The other components are identical to those of the preferred embodiment, except for stop 48 and locking disk 50 which here, are superfluous. This embodiment is intended to be the central item in a kit including per-se known components for converting a simple milling machine having a vertical head into a spark erosion machine.

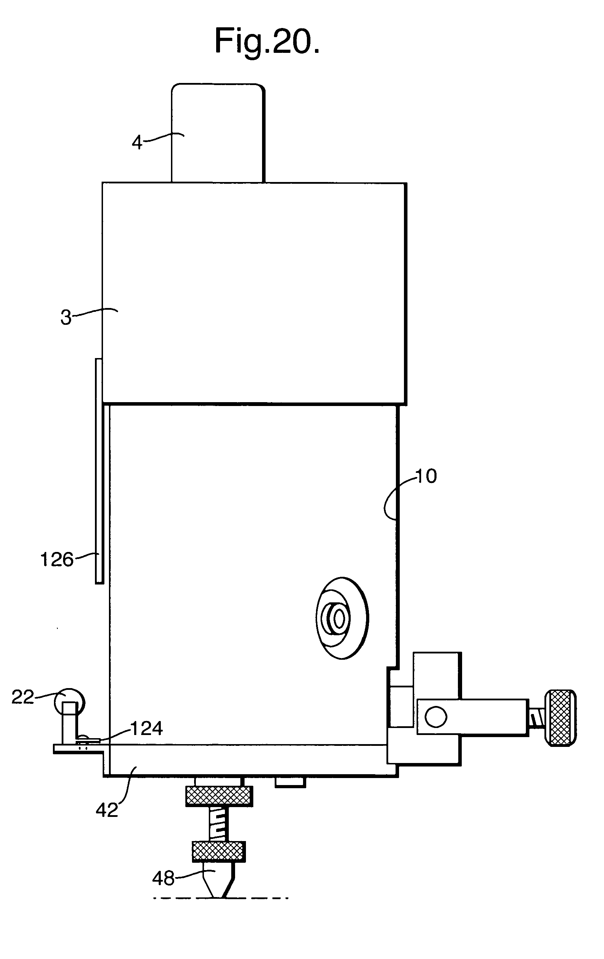

Fig. 20 illustrates an embodiment of the invention provided with a signalling device indicating the conclusion of the erosion process.

As spark-erosion machining is mostly an automatic, but lengthy process, operators of the equipment cannot be expected to be continuously present and require some alarm means drawing their attention to the fact that the erosion process has come to an end.

Conventional spark-erosion machines have safety devices in the form of a limit switch that is set to the required travel along the Z axis, at the end of which the machine is switched off. If the limit switch is not properly set, there exists the danger in ordinary erosion work that the electrode will go on eroding whatever is in its way, including the working table. With the device for producing threads, an additional difficulty may be encountered: a full orbital movement of the electrode requires a Z-movement of 50 mm. If, due to a setting error of the limit switch this distance is exceeded, the machine head, including top plate 2, will continue to descend until retaining strip 17 will encounter bottom plate 42. This will produce an overloading of the machine's servomotor, the overload protection of which will eventually stop the machine.

To avoid this rather rough method of stopping the machine, there is provided a small incandescent bulb 122, one terminal of which is connected to ground (-) via bottom plate 42 and stop 48. The other terminal is a contact spring 124 insulated from ground. Bulb 122 lights up when contact spring 124 is connected to the head of the machine (+). This connection is effected by a metal strip 126 attached to skirt 3. When stop 48 hits the work piece and the upper part of the attachment descends while activating main shaft 34, metal strip 126 descends until it touches contact spring 124, closing the bulb circuit. At this moment, bulb 122 lights up, producing enough light to trigger a light sensor with which today, most spark erosion machines are equipped and which causes the mechanism to be stopped and a visible or audible alarm to be activated.

It has been found that the accuracy of the work performed considerably improves when the electrode is attached in coaxiality with pin 68 rather than axially offset in V-block 90 (Fig. 4). While Fig. 15 discloses such a coaxiality, this arrangement is only suitable were rotational, as well as orbital, movement required, but cannot be used for purely orbital movement.

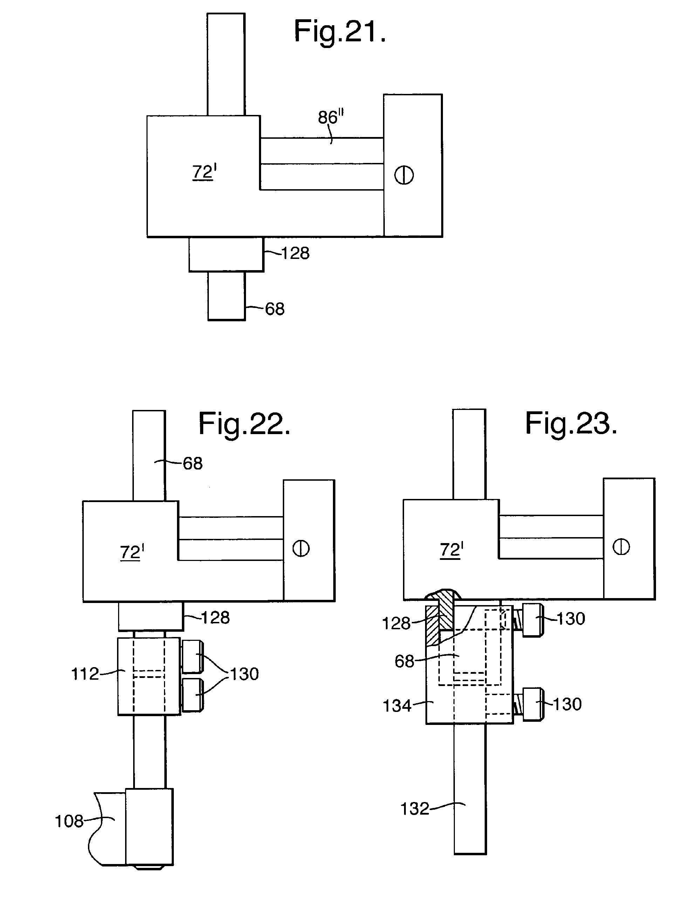

The variant of electrode holder 72' shown in Fig. 21 permits the use of the previously mentioned off-axis mounting of the electrode (which has the advantage of better visibility of the working spot) and the coaxial mounting of the electrode (which provides greater accuracy). There is seen in Fig. 21 a cylindrical projection 128 integral with electrode holder 72', with pin 68 projecting beyond projection 128.

Fig. 22 shows the electrode holder of Fig. 21, together with sleeve 112 of Fig. 15, mounting the electrode 108 with the aid of two screws 130. This enables the electrode to perform an orbital, as well as a rotational, movement such as that explained in conjunction with Figs. 15 and 16 a to d.

In Fig. 23, electrode 132 is connected to electrode holder 72' by means of sleeve 134, which is fixedly attached to cylindrical projection 128 that, as already mentioned, is an integral part of electrode holder 72'. Clearly, electrodes attached to this variant, while coaxial with pin 68, can only perform an orbital movement.

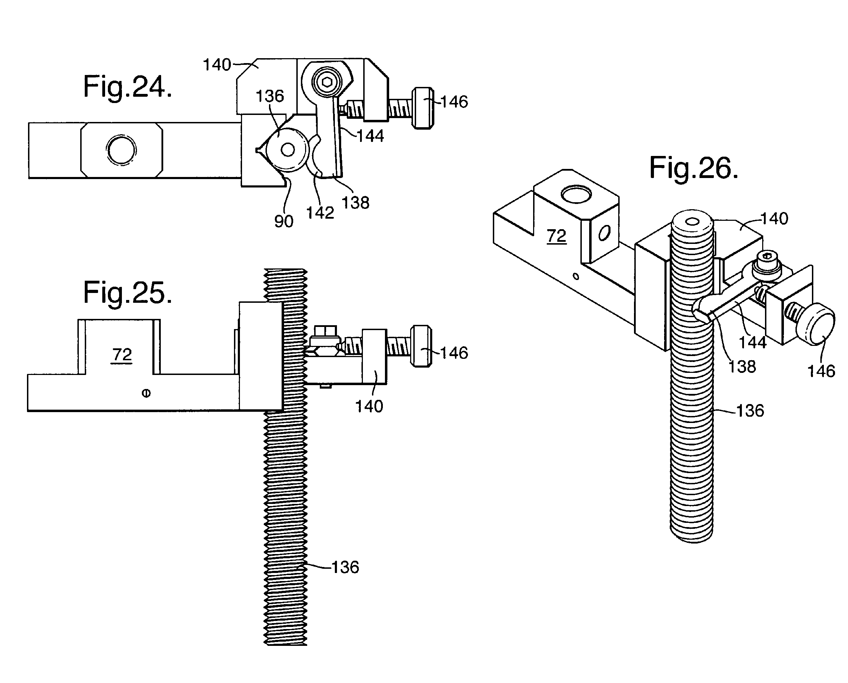

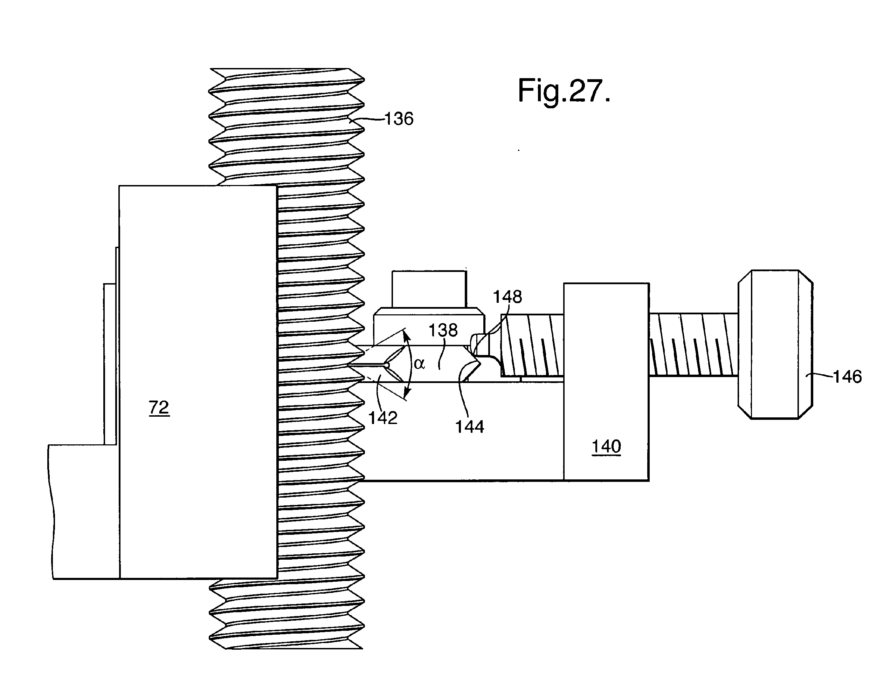

A variant of electrode holder 72 seen to best advantage in Figs. 4 and 5 is illustrated in Figs. 24 to 27. The main different between the original holder 72 and the variant resides in the way the electrode 136 is pressed into V-notch 90 of holder 72. While in the original holder 72 this is accomplished by means of a clamp 92 (Fig. 4), in the present variant this is effected by an arm 138 pivotably mounted on a block 140 itself fixedly attached to holder 72. On the electrode side, arm 138 is provided with a curved knife edge 142, the angle α of which corresponds to the angle of the thread of electrode 136. The other edge of arm 138 is provided with a slanting surface 144. A thumbscrew 146 has a rounded tip 148 which can be brought to bear on the slanting surface 144. When thumbscrew 146 is rotated, the force produced by tip 148 resolves into a torque swivelling arm 138 and causes knife edge 142 to press electrode 136 into V-notch 90, and, due to slanting surface 144, to force the pivoted end of arm 138 against its supporting surface on block 140, thereby eliminating any play that would allow arm 138 to move in the Z-direction.

The advantage of the above variant consists in the fact that the threaded electrode 136 can be moved in the Z-direction only by multiples of its pitch. This facilitates the removal of an electrode, the end portion of which has been badly eroded, cutting away that end portion, and returning the thus repaired electrode, while being sure that the returned electrode will properly re-engage the already existing internal threads of the workpiece. Another useful application of the above variant is the possibility at any time, to increase the length of an internal thread without danger that already existing threads will be damaged by possible misengagement of the electrode.

It should also be noted that the initial movement from point 0 to point 1 is linear (Fig. 11) and that this linear movement can be utilized, e.g., for engraving or undercutting.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An attachment for a spark erosion machine having a working head, said attachment comprising a top part fixedly attachable to said working head;
a body suspended from, and moveable relative to, said top part with one degree of freedom in translation;
guide means for guiding said body in said translational movement;
a main shaft mounted in said body and rotatable about an axis parallel to said translational movement;
means for imparting said main shaft a rotational movement;
a drive pin having an axis parallel to the axis of said main shaft and rotatably
connected thereto by adjustable connection means adapted to connect said drive pin to said main shaft in a plurality of positions between a first limit position of coaxiality and a second limit position of maximal eccentricity relative to said main shaft;
an electrode holder associated with said drive pin, and
coupling means connected to said electrode holder for resolving the rotary movement of said drive pin when in an axially eccentric position into an electrode movement in a compound XY-direction only, producing an orbital movement of an electrode mounted in said electrode holder.

2. The attachment as claimed in claim 1, wherein said means for imparting said main shaft a rotational movement is a helix, the upper end of which is fixedly connected to said top part and the lower end engages a plate having a suitably shaped opening and being fixedly connected to said main shaft, whereby the introduction, in the axial direction, of said helix into said plate causes said main shaft to rotate.

3. The attachment as claimed in claim 1, further comprising a spring-loaded friction pad housed in said electrode holder and continuously applied against said drive pin.

4. The attachment as claimed in claim 1, further comprising a crank housing fixedly attached to, and rotating with, said main shaft.

5. The attachment as claimed in claim 1, wherein said connection means is a crank block accommodated in said crank housing and capable of pivoting about an axis parallel to, but radially offset with respect to, the axis of said main shaft, said crank block, when pivoting, is adapted to assume a plurality of positions between said first and said second limit position.

6. The attachment as claimed in claim 1, wherein said means for imparting said main shaft a rotational movement is an electric motor mounted on said body.

7. The attachment as claimed in claim 1, wherein an electrode is directly attachable to said drive pin, whereby said electrode is enabled to perform, in addition to said orbital movement, also a rotational movement.

8. The attachment as claimed in claim 1, further comprising a helical compression spring interposed between said top plate and said body and tending to push away said body from said top plate.

9. The attachment as claimed in claim 1, further comprising a scale-bearing setting screw adapted to act on said drive pin to select the eccentricity of said drive pin relative to said main shaft.

10. The attachment as claimed in claim 1, wherein said electrode holder is further provided with a cylindrical projection integral with said electrode holder.

11. The attachment as claimed in claim 10, further comprising a sleeve, one end of which is fixedly attachable to said cylindrical projection and to the other end of which is fixedly attachable an electrode.

12. The attachment as claimed in claim 1, wherein said electrode holder comprises a pivotable arm provided at one of its ends with a knife edge having an angle substantially equal to the angle of the threaded electrode, said arm adapted to be controllably pivoted, thereby causing said electrode to be clamped into said holder.

# Fig.1.

# Fig.2.

# Fig.3.

# Fig.4.

# Fig.5.

# Fig.6.

# Fig.7.

# Fig.8.

# Fig.9.

62
78
68
54
64
74
76

# Fig.10.

86'
82
90
68
86

# Fig.11.

Fig.12a.

Fig.12b.

Fig.12c.

Fig.12d.

Fig.12e.

Fig.12f.

Fig.12g.

Fig.12h.

Fig.12i.

Fig.12j.

Fig.12k.

Fig.12l.

Fig.12m.

## Fig.13.

## Fig.14.

Fig.15.

Fig.16a.

Fig.16b.

Fig.16c.

Fig.16d.

# Fig.17.

# Fig.18.

# Fig.19.

# Fig.20.

# Fig.21.

86″

72¹

128

68

# Fig.22.

68

72¹

128

112

130

108

# Fig.23.

72¹

128

130

68

134

130

132

Fig.24.

140

136

146

144

90    142    138

Fig.25.

72

146

140

136

Fig.26.

72

140

144

146

138

136

EP 1 795 290 A2

Fig.27.